Europäisches Patentamt

European Patent Office

Office européen des brevets

(19)

(11) Veröffentlichungsnummer: **0 098 429**
**B1**

(12) **EUROPÄISCHE PATENTSCHRIFT**

(45) Veröffentlichungstag der Patentschrift: **11.02.87**

(21) Anmeldenummer: **83105949.8**

(22) Anmeldetag: **18.06.83**

(51) Int. Cl.⁴: **G 01 J 3/18**

(54) Monochromator.

(30) Priorität: **01.07.82 DE 3224559**

(43) Veröffentlichungstag der Anmeldung:
**18.01.84 Patentblatt 84/03**

(45) Bekanntmachung des Hinweises auf die
Patenterteilung:
**11.02.87 Patentblatt 87/07**

(84) Benannte Vertragsstaaten:
**CH DE FR GB IT LI**

(56) Entgegenhaltungen:
**DE-A-1 203 977**
**DE-A-2 108 133**
**GB-A-1 370 414**

**PATENTS ABSTRACTS OF JAPAN, Band 3, Nr.**
**153, 22. Dezember 1978, Seite 9781E78**
**Brügel "Einführung in die Ultrarot**
**Spektroskopie", 3. Aufl. (1962), S. 183**

(73) Patentinhaber: **Bodenseewerk Perkin-Elmer &**
**Co. GmbH**
**Alte Nussdorfer Strasse 15 Postfach 1120**
**D-7770 Überlingen/Bodensee (DE)**

(72) Erfinder: **Witte, Wolfgang, Dr.**
**Burgbergring 9**
**D-7770 Überlingen/Bodensee (DE)**

(74) Vertreter: **Weisse, Jürgen, Dipl.-Phys. et al**
**Patentanwälte Dipl.-Phys. Jürgen Weisse Dipl.-**
**Chem. Dr. Rudolf Wolgast Bökenbusch 41**
**Postfach 11 03 86**
**D-5620 Velbert 11 Langenberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 098 429 B1

**Beschreibung**

Die Erfindung betrifft einen Monochromator mit variierbarer Wellenlänge, enthaltend

(a) einen Eintrittsspalt,

(b) ein erstes dispersives Element mit einem auf der optischen Achse liegenden Auffächerungspunkt, in welchem ein einfallendes Bündel in unter verschiedenen, wellenlängenabhängigen Winkeln ausfallende Bündel aufgefächert wird,

(c) ein zweites dispersives Element mit einem zugehörigen Auffächerungspunkt,

(d) erste abbildende optische Mittel zur Erzeugung eines reellen, spektral zerlegten Bildes des Eintrittsspaltes in einer im Strahlengang zwischen dem ersten und dem zweiten dispersiven Element liegenden Fläche und

(e) einen in dieser letzteren Fläche angeordneten Zwischenspalt.

Bei einem Monochromator fällt ein spektral zu zerlegendes Lichtbündel auf einen Eintrittsspalt. Von dem Eintrittsspalt wird das Lichtbündel auf ein dispersives Element, beispielsweise ein Gitter oder ein Prisma, geleitet. Das dispersive Element fächert die einfallende Strahlung in Abhängigkeit von der Wellenlänge auf. Die Strahlung wird in Abhängigkeit von der Wellenlänge in verschiedene Richtungen gelenkt. Durch abbildende optische Mittel wird mittels der spektral aufgefächerten Lichtbündels ein Bild des Eintrittsspalts erzeugt. Dieses Bild des Eintrittsspalts ist entsprechend spektral auseinandergezogen und bildet ein Spektrum. In der Ebene dieses Spektrums ist ein feststehender Austrittsspalt angeordnet, durch welchen Strahlung einer bestimmten Wellenlänge aus dem Monochromator austritt. Um die Wellenlänge der austretenden Strahlung zu variieren wird ein optisches Glied verschwenkt. Dieses optische Glied kann beispielsweise ein Littrow-Spiegel in einem Prismenmonochromator oder das Gitter in einem Gittermonochromator sein. Wenn man eine lineare Wellenlängen- oder Wellenzahlskala erhalten will, dann muß die Verschwenkung nach einer bestimmten Funktion in Abhängigkeit von der gewünschten Wellenlänge erfolgen. Bei einem Gitterspektrometer erfolgt beispielsweise die Verschwenkung nach einer Sinusfunktion (Brügel "Einführung in die Ultrarotspektroskopie" 3. Aufl. 1962 S. 183, DE—A—1 203 977).

Solche nichtlinear gesteuerte Antriebe sind aufwendig und teuer.

Soll ein Spektralbereich mehrmals abgetastet werden, so ist es erforderlich, das verschwenkbare optische Glied wieder in die Anfangsstellung zurückzubewegen. Die Frequenz einer solchen periodischen Abtastung des Wellenlängenbereichs ist dadurch stark begrenzt.

Außer der gewünschten Strahlung tritt durch den Austrittsspalt in der Praxis auch Strahlung unerwünschter Wellenlänge (Falschlicht) aus. Um diesen Falschlichtanteil zu reduzieren, sind Doppelmonochromatoren bekannt. Solche Doppelmonochromatoren enthalten ein erstes dispersives Element auf welches das Licht von dem Eintrittsspalt geleitet wird. Das erste dispersive Element und abbildende optische Mittel erzeugen ein Spektrum in der Ebene eines Zwischenspalts. Dieser Zwischenspalt läßt somit nur Licht einer bestimmten gewünschten Wellenlänge durch, dem sich jedoch ein bestimmter Falschlichtanteil überlagert. Der Zwischenspalt bildet den Eintrittsspalt für einen zweiten Monochromator mit einem zweiten dispersiven Element. Das von dem zweiten dispersiven Element nochmals aufgefächerte Licht wird als Spektrum in der Ebene eines Austrittsspalts gesammelt. Der Austrittsspalt läßt aus diesem Spektrum Licht der gleichen Wellenlänge durch wie der Zwischenspalt. Auch hier kann durch Streuung und Unvollkommenheiten der Bauteile Falschlicht entstehen. Da aber im wesentlichen nur Licht der gewünschten Wellenlänge durch den Zwischenspalt aus dem "Vormonochromator" in den "Hauptmonochromator" gelangt, kann das Falschlicht nur wieder ein kleiner Anteil eines ohnehin schon kleinen eintretenden Anteils darstellen. Auch hier erfolgt die Wellenlängeneinstellung durch Verstellung optischer Bauteile, wobei in diesem Falle Bauteile von Vor- und Hauptmonochromator synchron mit der gewünschten Wellenlänge verstellt werden müssen.

Der Erfindung liegt die Aufgabe zugrunde, einen Monochromator mit variierbarer Wellenlänge zu schaffen, bei welchem die dispersiven Elemente gehäusefest angeordnet sind.

Insbesondere soll der Monochromator eine schnelle periodische Abtastung des Spektrums gestatten. Es soll eine Unterdruckung von Falschlicht wie bei einem Doppelmonochromator erfolgen, ohne daß dazu in Vor- und Hauptmonochromator optische Bauteile synchron verstellt werden müssen.

Erfindungsgemäß wird diese Aufgabe dadurch gelöst, daß

(f) der Auffächerungspunkt des ersten dispersiven Elements durch zweite abbildende optische Mittel auf den Auffächerungspunkt des zweiten dispersiven Elements abgebildet wird,

(g) der Zwischenspalt zur Wellenlängenvariation querbeweglich ist und

(h) das zweite dispersive Element so angeordnet ist, daß es die durch das erste dispersive Element aufgefächerten und durch die zweiten optischen Mittel auf den Auffächerungspunkt gerichteten Bündel im wesentlichen wieder zu einem einzigen Bündel vereinigt.

Während bei einem Doppelmonochromator der Hauptmonochromator das Licht des Vormonochromators weiter spektral zerlegt, wird bei der Erfindung der durch das erste dispersive Element spektral aufgefächerte Strahlengang wieder zu einem einheitlichen Lichtbündel vereinigt. Die Abtastung des Spektrums erfolgt durch den Zwischenspalt, der in der Ebene des reellen, spektral zerlegten Bildes des Eintrittsspalts querbeweglich ist. Im Gegensatz zu einem querbeweglichen Austrittsspalt bei einem üblichen Monochromator wird durch die Querbewegung des Zwischenspalts die Geometrie des aus dem Monochromator austretenden Lichtbündels nicht beeinflußt. Wollte man bei einem üblichen Monochromator zur Wellenlängenabtastung den Austrittsspalt über das erzeugte Spektrum bewegen, so würde dies zu Schwierigkeiten führen, da ja der Austrittsspalt durch ein abbildendes optisches System auf einen Detektor abgebildet wird.

Ausgestaltungen der Erfindung sind Gegenstand der abhängigen Ansprüche.

Ausführungsbeispiele der Erfindung sind nachstehend unter Bezugnahme auf die zugehörigen Zeichnungen näher erläutert:

Fig. 1 ist eine schematische Darstellung des Strahlengangs eines Monochromators, wobei die Lichtbündel jeweils durch ihre Bündelachse dargestellt sind.

Fig. 2 zeigt eine bei dem Monochromator von Fig. 1 benutzte Scheibe mit einem den Zwischenspalt bildenden spiraligen Schlitz.

Fig. 3 zeigt den Strahlengang des Monochromators bei einem zweiten Ausführungsbeispiel.

Fig. 4 zeigt den Strahlengang des Monochromators bei einem dritten Ausführungsbeispiel.

Fig. 5 zeigt den Strahlengang des Monochromators ähnlich Fig. 3 mit einer bevorzugten Anordnung der Filter zur Unterdrückung höherer Ordnungen.

Mit 10 ist eine Lichtquelle bezeichnet, die durch einen Hohlspiegel 12 auf einen Eintrittsspalt 12 abgebildet wird. Der Achsenstrahl 16 des Lichtbündels trifft in einem Punkt 18 auf ein als Konkavgitter ausgebildetes erstes dispersives Element. Das erste dispersive Element 20 fächert das Bündel in Abhängigkeit von der Wellenlänge auf und erzeugt einen Strahlenfächer 22. Mit 24 und 26 sind wieder die Achsenstrahlen der verschiedenen Wellenlängen zugeordneten Bündel bezeichnet. Das als Konkavgitter ausgebildete erste dispersive Element 20 erzeugt ein reelles, spektral zerlegtes Bild des Eintrittsspalts 14 in einer Ebene 28. In dieser Ebene 28 ist eine drehbare Scheibe 30 angeordnet.

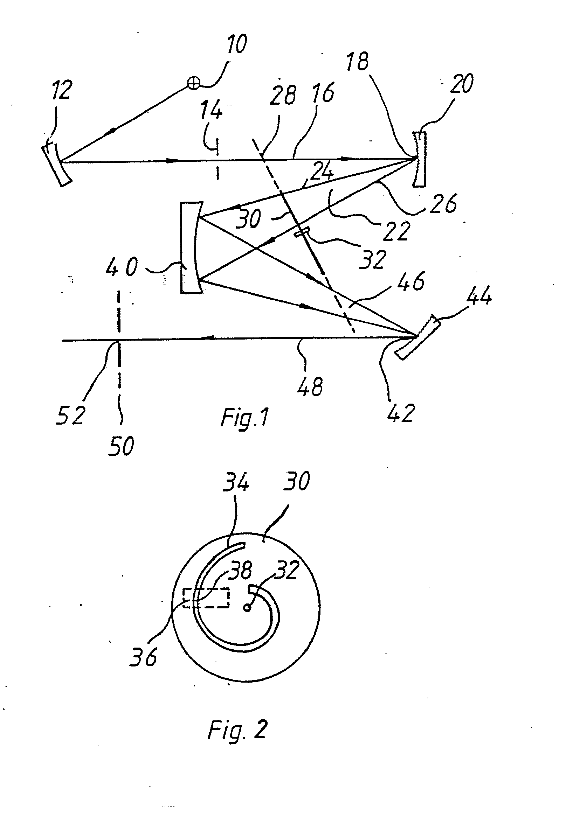

Die Scheibe 30 ist in Fig. 2 dargestellt. Die Drehachse der Scheibe 30 ist mit 32 bezeichnet. Die Scheibe 30 ist mit einem spiraligen Schlitz 34 versehen. Ein Abschnitt dieses Schlitzes 34 erstreckt sich über das in der Ebene 28 erzeugte Spektrum 36 und bildet so einen Zwischenspalt 38.

Der Punkt 18 bildet den auf der optischen Achse liegenden Auffächerungspunkt des dispersiven Elements 20, in welchem ein einfallendes Bündel in unter verschiedenen, wellenlängenabhängigen Winkeln ausfallende Bündel, z.B. 24 und 26, aufgefächert wird. Ein Hohlspiegel 40 bildet diesen Auffächerungspunkt 18 in den Auffächerungspunkt 42 eines als Konkavgitter ausgebildeten zweiten dispersiven Elements 44 ab. Der im Auffächerungspunkt 42 zusammenlaufende, konvergente Strahlenfächer 46 wird von dem zweiten dispersiven Element 44 in einem einzigen Strahl 48 vereinigt. Der Hohlspiegel 40 und des Konkavgitter (zweite dispersive Element 54) bilden die Bildfläche 28 in einer Ebene 50 ab. In der Ebene 50 ist ein Austrittsspalt 52 angeordnet.

Der Eintrittsspalt 14 kann auch durch eine ausreichend schmale Lichtquelle ersetzt werden. In diesem Falle dient die Lichtquelle selbst als "Eintrittsspalt" im Sinne der vorliegenden Erfindung.

Bei der bevorzugten Ausführungsform wird die Scheibe 30 mit konstanter Drehzahl im Uhrzeigersinn angetrieben. Der als Zwischenspalt 38 dienende Abschnitt des spiraligen Schlitzes 34 bewegt sich dann über das feststehende Spektrum 36 von links nach rechts und springt dann wieder nach links, so daß das Spektrum in schneller Folge von links nach rechts in Fig. 2 abgetastet wird. Der Schlitz 34 ist so spiralig geformt, daß der Zwischenspalt 38 bei gleichen Drehwinkelinkrementen der Scheibe 30 jeweils um gleichen Wellenlängeninkrementen entsprechende Strecken relativ zu dem Spektral zerlegten Bild 36 des Eintrittsspalt 14 verschoben wird. Die Breite des spiraligen Schlitzes 34 ändert sich längs desselben so, daß sich über den gesamten abgetasteten Wellenlängenbereich eine im wesentlichen konstante spektrale Spaltbreite ergibt. Das Spektrum wird auf diese Weise zeitlinear mit konstanter spektraler Breite abgetastet. Die Abtastung kann natürlich auch so erfolgen, daß statt der Wellenlänge die Wellenzahl sich linear mit der Zeit ändert.

Der den Zwischenspalt 38 bildende Abschnitt des Schlitzes 34 ist leicht gekrümmt. Die Krümmung der Spirale nimmt auf der Scheibe 30 nach innen hin zu.

Die Spaltkrümmung im Spektrum wächst also von links nach rechts, wobei der Spalt jeweils nach links konvex gekrümmt ist. Das entspricht mindestens qualitativ der Form der Spaltbilder. Ein Gitter liefert bekanntlich gekrümmte Spaltbilder, wobei die Krümmung mit der Wellenlänge zunimmt und die konvexe Seite nach der kurzwelligen Seite des Spektrums hin gerichtet ist. Zeigt das Spektrum 36 also links die kurzen und rechts die langen Wellenlängen, dann sind die Spaltbilder nach links konvex gekrümmt, und ihre Krümmung nimmt nach rechts hin zu. Die genannte Krümmung der Spaltbilder wird bei geradem Eintrittsspalt erzeugt. Diese Krümmung der Spaltbilder kann durch eine leichte Krümmung des Eintrittsspalts nach der einen oder der anderen Richtung verändert werden. Dadurch läßt sich eine optimale Anpassung der Spaltbildkrümmungen an die Krümmungen der den Zwischenspalt 38 bildenden Abschnitte des spiraligen Schlitzes 34 erzielen. Die von dem das erste dispersive Element 20 bildenden Gitter erzeugten Krümmungen werden von dem das zweite dispersive Element 44 bildenden Gitter wenigstens teilweise kompensiert, so daß in der Ebene 50 ein annähernd wellenlängenunabhängig gerades Spaltbild entsteht.

Der beschriebene Monochromator hat zugleich die Funktion eines Doppelmonochromators und ist entsprechend streulichtarm. Er zeigt alle Merkmale eines Doppelmonochromators, nämlich einen Eintrittsspalt 14, ein erstes dispersives Element 20, einen Zwischenspalt 36, ein zweites dispersives Element 44 und einen Austrittsspalt 52.

Die Streulichtreduzierung ist wie bei jedem Doppelmonochromator zu erklären:

Infolge von Störzentren (Staub, Unregelmäßigkeiten der Oberfläche) auf dem ersten dispersiven Element 20 tritt durch den Zwischenspalt 38 nicht nur Strahlung der gerade eingestellten Wellenlänge sondern auch ein geringer Anteil Strahlung anderer Wellenlängen (Falschlicht). Die Strahlung trifft dann auf das zweite dispersive Element 44. Dieses lenkt die Strahlung der gewünschten Wellenlänge zum Austrittsspalt 52, den Anteil anderer Wellenlängen aber hauptsächlich neben die Spaltöffnung des Austrittsspalt 52. Von dem durch den Zwischenspalt 38 getretenen Falschlicht gelangt somit wieder nur ein kleiner Anteil durch den Austrittsspalt 52, nämlich der Anteil, der an dem zweiten dispersiven Element 44 nochmals durch Streuzentren in die optische Achse gestreut wird. Das restliche Falschlicht ist also ein kleiner Anteil eines kleinen Anteils.

Die dispersiven Element 20 und 44 können auch von Prismen mit einem Littrow-Spiegel gebildet sein. Bei Gittern sind die Auffächerungspunkte 18 und 42 reelle Punkte. Bei Prismen sind die Auffächerungspunkte virtuelle Punkte.

Die Breite des spiraligen Schlitzes 34 kann auch so programmiert werden, daß sich statt konstanter spektraler Spaltbreite ein konstantes Signal am Detektor ergibt, d.h. das Produkt aus Strahlungsfluß und Empfängerempfindlichkeit konstant wird. Das ist bei Detektoren mit kleinem Dynamikbereich erforderlich.

Ein Monochromator der vorliegenden Art kann in der Ausführung mit Prismen als dispersive Elemente als Vormonochromator eines normalen Gittermonochromators dienen. Seine Hauptfunktion besteht dann in der Unterdrückung nicht gewünschter Gitterordnungen.

Gegenüber den bekannten Filtern hat ein solcher Vormonochromator den Vorteil, daß die mit der Verwendung von Filtern verbundenen Probleme, wie z.B. Sprünge in der Hunderprozentlinie oder falschlichtbedingte Sprünge bei hohen Probenextinktionen, vermieden werden. Gegenüber einem normalen Prismenvormonochromator ergibt sich der Vorteil, daß keine optischen Bauelemente (Littrow-Spiegel) verschwenkt zu werden brauchen.

Bei Ausbildung als Gittermonochromator ergibt sich gegenüber einem herkömmlichen Gittermonochromator der Vorteil, daß der Wellenlängenbereich sehr schnell periodisch abgetastet werden kann. Ein solcher Gittermonochromator kann daher beispielsweise bei einem Detektor für Flüssigkeitschromatographie angewandt werden.

Wenn Filter, die zur Unterdrückung nicht gewünschter Gitterordnungen erforderlich sind, direkt auf die Scheibe 30 gesetzt werden, werden Sprünge in der Aufzeichnung beim Filterwechsel vermieden. Es verschiebt sich nämlich die Grenzlinie zwischen zwei Filtern über den als Zwischenspalt wirksamen Abschnitt, so daß sich ein kontinuierlicher Übergang ergibt.

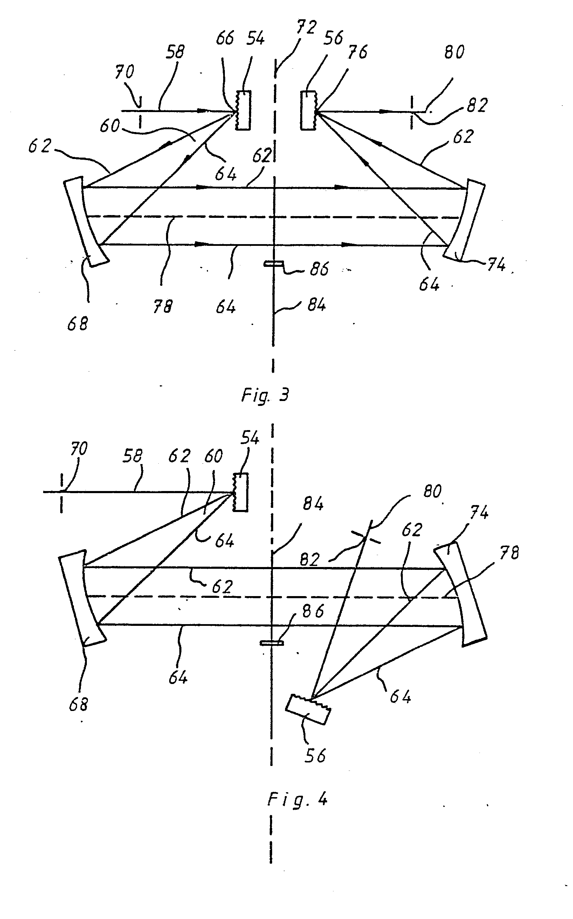

Bei der Ausführungsform nach Fig. 3 ist mit 54 ein erstes dispersives Element in Form eines ebenen Gitters und mit 56 ein zweites dispersives Element ebenfalls in Form eines ebenen Gitters bezeichnet. Die beiden als Gitter ausgebildeten dispersiven Elemente sind mit einander zugewandten Rückseiten parallel und gleichachsig angeordnet. Das erste dispersive Element 54 fächert ein einfallendes Lichtbündel 58 wellenlängenabhängig in einen Fächer 60 von spektral zerlegten Bündeln auf, von denen Bündel 62 und 64 durch ihre Achsenstrahlen 62 und 64 dargestellt sind. Die Auffächerung erfolgt in einem auf der optischen Achse liegenden Auffächerungspunkt 66. Erste abbildende optische Mittel in Form eines Hohlspiegels 68 erzeugen ein reelles Bild eines Eintrittsspalts 70 in einer Fläche 72, die hier im wesentlichen die Mittelebene der in Fig. 3 dargestellten Anordnung ist. Gleichzeitig bildet der Hohlspiegel 68 den Auffächerungspunkt 66 im Unendlichen ab. Die Achsenstrahlen der Bündel 62 und 64 verlaufen daher parallel.

Ein zweiter Hohlspiegel 74 richtet die parallelen, aufgefächerten Bündel 62, 64 auf den Auffächerungspunkt 76 des zweiten dispersiven Elements 56. Es wird daher, wie die Achsenstrahlen der Bündel 62 und 64 zeigen, von den beiden Hohlspiegeln 68 und 74 der Auffächerungspunkt 66 des ersten dispersiven Elements 54 auf den Auffächerungspunkt 76 des zweiten dispersiven Elements abgebildet. Die beiden Hohlspiegel 68 und 74 bilden also zusammen die "zweiten abbildenden optischen Mittel" im Sinne der Erfindung.

Das zweite dispersive Element 56 liegt so zu dem Hohlspiegel 64 wie das erste dispersive Element 54 zu dem Hohlspiegel 68. Dabei ist zu beachten, daß der Achsenstrahl des Bündels 62 unter einem kleineren Winkel zur Gitternormalen des dispersiven Elements 54 ausgeht als der Achsenstrahl des Bündels 64, und daß durch die zweifache Reflexion an den Hohlspiegeln 68 und 74 in entsprechender Weise der Achsenstrahl des Bündels 64 unter einem kleineren Winkel zur Gitternormalen auf das dispersive Element 56 auftrifft als der Achsenstrahl des Bündels 64. Die Anordnung ist vollständig symmetrisch: Die beiden Gitter, welche die dispersiven Elemente 54 und 56 bilden, sind symmetrisch und parallel zu einer Mittelebene 72 angeordnet. Die beiden Hohlspiegel 68 und 74 sind einander zugewandt symmetrisch zu dieser Mittelebene 72 angeordnet. Die beiden einander zugewandten Hohlspiegel 68 und 74 sind zu einer die Scheitelpunkte der Hohlspiegel 68 und 74 verbindenden Geraden 78 gegensinnig geneigt:

Die optische Achse des Hohlspiegels 68 ist gegenüber der Geraden 78 entgegen dem Uhrzeigersinn verschwenkt. Die optische Achse des Hohlspiegels 74 ist gegenüber der Geraden 78 im Uhrzeigersinn verschwenkt. Die Gerade 78 verläuft senkrecht zu der Mittelebene 72. Die spektrale aufgefächerten Lichtbündel 62, 64 verlaufen zwischen den Hohlspiegeln parallel zu dieser Geraden 78. Das reelle spektral zerlegte Bild des Eintrittsspalts 70 liegt, wie schon erwähnt, im wesentlichen in der Mittelebene 72. Es werden so die durch das erste dispersive Element 54 aufgefächerten und durch die zweiten optischen Mittel 68, 74 auf den Auffächerungspunkt 76 des zweiten dispersiven Elements 56 gerichteten Bündel 62, 64 wieder zu einem einzigen Bündel 80 vereinigt.

Im Strahlengang des Bündels 80, welches durch das zweite dispersive Element 56 durch Wiedervereinigung der aufgefächerten Bündel 62, 64 erzeugt wird, wird durch den Hohlspiegel 76 symmetrisch zu dem Eintrittsspalt 70 in Bezug auf die Mittelebene 72 ein weiteres Bild dieses Eintrittsspalts 72 erzeugt. In der Ebene dieses weiteren Bildes ist ein Austrittsspalt 82 angeordnet.

In der Mittelebene 72 rotiert eine Scheibe 84 um einem Achse 86. Die Scheibe 84 ist mit einem (nicht dargestellten) spiraligen Schlitz versehen. Die Ausbildung der Scheibe 84 und ihre Anordnung relativ zu dem in der Mittelebene 72 erzeugten, spektral zerlegten Bild des Eintrittsspalts 70 ist ähnlich wie bei dem Ausführungsbeispiel nach Fig. 1 und 2 und daher hier nicht im einzelnen dargestellt und beschrieben. Wie dort streicht ein Zwischenspalt, der jeweils von einem Abschnitt des spiraligen Schlitzes gebildet wird, periodisch über das spektral zerlegte Bild des Eintrittsspalts 70.

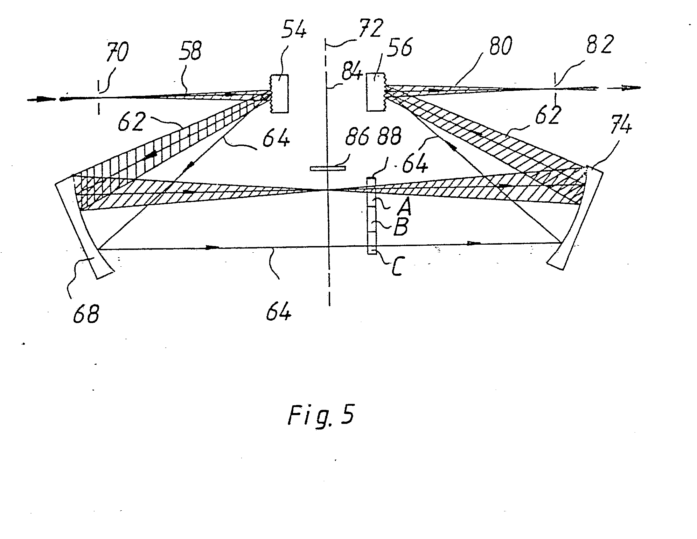

Zur Eliminierung unerwünschter Gitterordnungen sind Filter vorgesehen. Diese können, wie in Zusammenhang mit Fig. 1 und 2 beschrieben, auf der umlaufenden Scheibe 84 angeordnet sein. Eine besonders vorteilhafte Anordnung ist jedoch in Fig. 5 dargestellt.

Fig. 5 entspricht im wesentlichen Fig. 3. Jedoch ist von dem Bündel 62 nicht nur der Achsenstrahl sondern das gesamte Bündel dargestellt, um die Abbildungen besser zu veranschaulichen. Bei der Ausführungsform nach Fig. 5. sind im Strahlengang der spektral aufgefächerten Bündel 62, 64 feststehende Filter 88 angeordnet, die mit A, B und C mit gekennzeichnet sind. Diese Filter 88 bewirken eine Unterdrückung unerwünschter Gitterordnungen. Es kann mit feststehenden Filtern 88 statt mit einem sonst gebräuchlichen Filterrad gearbeitet werden, da auch das abgetastete Spektrum in dem Mittelebene 72 im Gegensatz zu üblichen Monochromatoren feststehend ist.

Die Filter 88 können im wesentlichen in der Mittelebene 72 angeordnet werden. Vorteilhafterweise sind aber die Filter 88, wie in Fig. 5 dargestellt, in der Nähe aber im Abstand von der Fläche, d.h. hier der Mittelebene 72 angeordnet, in welcher die ersten abbildenden optischen Mittel, d.h. im wesentlichen Hohlspiegel 68, das reelle, spektral zerlegte Bild des Eintrittsspalts 70 erzeugen. Dadurch wird der Übergang von einem Filter zum nächsten bei der Abtastung des Spektrums stetiger gemacht.

Die Ausführungsform nach Fig. 4 ist im Prinzip ähnlich der von Fig. 3. Entsprechende Teile sind mit den gleichen Bezugszeichen versehen wie dort.

Links der Mittelebene 72 stimmt die Anordnung von Fig. 4 vollständig mit der von Fig. 3 überein. Es wird wie dort ein Spektrum als spektral zerlegtes Bild des Eintrittsspalts 70 im wesentlichen in der Mittelebene 72 erzeugt und durch die Scheibe 84 mit dem spiraligen Schlitz ähnlich wie in Fig. 2 abgetastet. Wie bei Fig. 3 ist auch bei Fig. 4 das zweite dispersive Element 56 zu dem zweiten Hohlspiegel 74 so angeordnet wie das erste dispersive Element 54 zu dem ersten Hohlspiegel 68. Jedoch sind in Fig. 4 die beiden einander zugewandten Hohlspiegel 68 und 74 zu der die Scheitelpunkte der Hohlspiegel 68, 74 verbindenden Geraden 78 gleichsinnig geneigt: Die optische Achse des Hohlspiegels 68 ist gegenüber der Geraden 78 entgegen dem Uhrzeigersinn verschwenkt. Ebenso ist die optische Achse des Hohlspiegels 74 gegenüber der Geraden 78 entgegen dem Uhrzeigersinn verschwenkt.

Diese Anordnung ist optisch etwas günstiger, da sie Abbildungsfehler, z.B. eine Schräglage der Bildfläche des Eintrittsspalts 70, kompensiert.

Statt als ebene Gitter können die dispersiven Elemente 54 und 56 auch bei den Ausführungsformen nach Fig. 3 und 4 als Konkavgitter ausgebildet sein. Die beiden Hohlspiegel 68 und 74 würden dann eine andere Brennweite haben.

**Patentansprüche**

1. Monochromator mit variierbarer Wellenlänge, enthaltend

(a) einen Eintrittsspalt (14, 70),

(b) ein erstes dispersives Element (20, 54) mit einem auf der optischen Achse liegenden Auffächerungspunkt (18, 66), in welchem ein einfallendes Bündel (16, 58) in unter verschiedenen, wellenlängenabhängigen Winkeln ausfallende Bündel (22, 60) aufgefächert wird,

(c) ein zweites dispersives Element (44, 56) mit einem zugehörigen Auffächerungspunkt (42, 76),

(d) erste abbildende optische Mittel (12, 68) zur Erzeugung eines reellen, spektral zerlegten Bildes des Eintrittsspaltes (14, 70) in einer im Strahlengang zwischen dem ersten (20, 54) und dem zweiten (44, 56) dispersiven Element liegenden Fläche (28, 72) und

(e) einen in dieser letzteren Fläche angeordneten Zwischenspalt (38),

dadurch gekennzeichnet, daß

(f) der Auffächerungspunkt (18, 66) des ersten dispersiven Elements (20,54) durch zweite abbildende optische Mittel (40, 74) auf den Auffächerungspunkt (42, 56) des zweiten dispersiven Elements (44, 56) abgebildet wird,

(g) der Zwischenspalt (38) zur Wellenlängenvariation querbeweglich ist und

(h) das zweite dispersive Element (44, 56) so angeordnet ist, daß es die durch das erste dispersive Element (20, 54) aufgefächerten und durch die zweiten optischen Mittel (40, 74) auf den Auffächerungspunkt (42, 76) des zweiten dispersiven Elements (44, 56) gerichteten Bündel (46) im wesentlichen wieder zu einem einzigen Bündel (48, 80) vereinigt.

2. Monochromator nach Anspruch 1, dadurch gekennzeichnet, daß die beiden dispersiven Elemente (20, 44, 54, 56) im wesentlichen übereinstimmend ausgebildet sind.

3. Monochromator nach Anspruch 2, dadurch gekennzeichnet, daß die beiden dispersiven Elemente (20, 44) Konkavgitter sind, wobei die konkave Ausbildung des ersten dispersiven Elements (20) als abbildende optische Mittel zur Erzeugung des Bildes des Eintrittsspalts (14) dient.

4. Monochromator nach Anspruch 3, dadurch gekennzeichnet, daß die zweiten optischen Mittel (40) von einem Hohlspiegel gebildet sind.

5. Monochromator nach einem der Ansprüche 1 bis 4, dadurch gekennzeichnet, daß im Strahlengang des Bündels (48, 80), welches durch das zweite dispersive Element (44, 56) durch Wiedervereinigung der aufgefächerten Bündel (22, 60) erzeugt wird, in der Bildebene (50) eines Bildes des Eintrittsspalts (14, 70) ein Austrittsspalt (52, 82) angeordnet ist.

6. Monochromator nach Anspruch 1, dadurch gekennzeichnet, daß

(a) die beiden dispersiven Elemente (54, 56) Gitter sind,

(b) die ersten abbildenden optischen Mittel einen ersten Hohlspiegel (68) aufweisen und

(c) die zweiten abbildenden optischen Mittel den ersten Hohlspiegel (68) und den zweiten Hohlspiegel (74) aufweisen.

7. Monochromator nach Anspruch 6, dadurch gekennzeichnet, daß

(a) der erste Hohlspiegel (68) den Auffächerungspunkt (66) des ersten dispersiven Elements (54) im Unendlichen und gleichzeitig den Eintrittsspalt (70) auf die besagte Fläche (72) abbildet und

(b) der zweite Hohlspiegel (74) die parallelen aufgefächerten Bündel (62, 64) auf den Auffächerungspunkt (76) des zweiten dispersiven Elements (56) richtet.

8. Monochromator nach Anspruch 7, dadurch gekennzeichnet, daß das zweite dispersive Element (56) zur dem zweiten Hohlspiegel (74) im wesentlichen so angeordnet ist wie das erste dispersive Element (54) zu dem ersten Hohlspiegel (68).

9. Monochromator nach Anspruch 7 oder 8, dadurch gekennzeichnet, daß

(a) die beiden als Gitter ausgebildeten dispersiven Elemente (54, 56) mit einander zugewandten Rückseiten angeordnet sind und

(b) die beiden einander zugewandten Hohlspiegel (68, 74) zu einer die Scheitelpunkte der Hohlspiegel verbindenden Geraden (78) gegensinnig geneigt sind.

10. Monochromator nach Anspruch 9, dadurch gekennzeichnet, daß die Gitter ebene Gitter sind.

11. Monochromator nach Anspruch 9 oder 10, dadurch gekennzeichnet, daß

(a) die beiden Gitter symmetrisch und parallel zu einer Mittelebene (72) angeordnet sind,

(b) die beiden Hohlspiegel (68, 74) symmetrisch zu dieser Mittelebene (72) angeordnet sind, wobei die besagte, die Scheitelpunkte der beiden Hohlspiegel (68, 74) verbindende Gerade (78) senkrecht zu dieser Mittelebene (72) verläuft,

(c) die spektral aufgefächerten Lichtbündel (62, 64) zwischen den Hohlspiegeln (68, 74) parallel zu dieser Geraden (78) verlaufen und

(d) das reelle spektrale zerlegte Bild des Eintrittsspalts (70) im wesentlichen in der Mittelebene (72) liegt.

12. Monochromator nach Anspruch 8, dadurch gekennzeichnet, daß die beiden einander zugewandten Hohlspiegel (68, 74) zu einer Geraden (78) gleichsinnig geneigt sind.

13. Monochromator nach einem der Ansprüche 1 bis 12, dadurch gekennzeichnet, daß der Zwischenspalt (38) von einem Abschnitt eines spiralig in einer drehbaren Scheibe (30) vorgesehenen Schlitzes (34) gebildet ist.

14. Monochromator nach Anspruch 13, dadurch gekennzeichnet, daß der Schlitz (34) so spiralig geformt ist, daß der Zwischenspalt (38) bei gleichen Drehwinkelinkrementen der Scheibe (30) jeweils um gleichen Wellenlängeninkrementen entsprechende Strecken relativ zu dem spektral zerlegten Bild (36) des Eintrittsspalts (14) verschoben wird.

15. Monochromator nach Anspruch 13 oder 14, dadurch gekennzeichnet, daß die Breite des spiraligen Schlitzes (34) sich längs desselben so ändert, daß sich über den gesamten abgetasteten Wellenlängenbereich eine im wesentlichen konstante spektrale Spaltbreite ergibt.

16. Monochromator nach einem der Ansprüche 13 bis 15, bei welchem die dispersiven Elemente (20, 44) Gitter sind, dadurch gekennzeichnet, daß die Scheibe (30) Filter zur Unterdrückung störender Gitterordnungen trägt.

17. Monochromator nach einem der Ansprüche 1 bis 16, bei welchem die dispersiven Elemente Gitter sind, dadurch gekennzeichnet, daß im Strahlengang der spektrale aufgefächerten Bündel feststehende Filter (88) zur Unterdrückung unerwünschter Gitterordnungen angeordnet sind.

18. Monochromator nach Anspruch 17, dadurch gekennzeichnet, daß die Filter (88) in der Nähe aber im Abstand von der Fläche (72) angeordnet sind, in welcher die ersten abbildenden optischen Mittel (68) das reelle, spektral zerlegte Bild des Eintrittsspalts (70) erzeugen.

**Revendications**

1. Monochromateur à longueur d'onde variable comprenant

a) une fente d'entrée (14, 70),

b) un premier élément dispersif (20, 54) ayant un point de dispersion (18, 66) situé sur l'axe optique et dans lequel un faisceau faisant incidence (16, 58) est dispersé en faisceaux (22, 60) sortant sous des angles différents en fonction de la longueur d'onde,

c) un deuxième élément dispersif (44, 56) avec un point de dispersion associé (42, 76),

d) des premiers moyens optiques de reproduction (12, 68) appelés à engendrer un image réel spectralement décomposé de la fente d'entrée (14, 70) dans une surface (28, 72) située dans la marche des rayons entre le premier (20, 54) et le deuxième (44, 56) élément dispersif, et

e) une fente intermédiaire (38) disposée dans cette surface,

caractérisé par le fait que

f) le point de dispersion (18, 66) du premier élément dispersif (20, 54) est reproduit par des deuxièmes moyens optiques de reproduction (40, 74) sur le point de dispersion (42, 56) du deuxième élément dispersif (44, 56),

g) la fente intermédiaire (38) est transversalement mobile pour la variation de la longueur d'onde, et

h) le deuxième élément dispersif (44, 56) est disposé de sorte qu'il réunit essentiellement en un seul faisceau (48, 80) les faisceaux (46) dispersés par le premier élément dispersif (20, 54) et dirigés par les deuxièmes moyens optiques de reproduction (40, 74) sur le point de dispersion (42, 76) du deuxième élément dispersif (44, 76).

2. Monochromateur selon la revendication 1, caractérisé par le fait que les deux éléments dispersifs (20, 44, 54, 56) sont formés essentiellement de manière conforme.

3. Monochromateur selon la revendication 2, caractérisé par le fait que les deux éléments dispersifs (20, 44) sont des réseaux concaves, la forme concave du premier élément dispersif (20) étant destinée, en tant que moyens optiques de reproduction, à engendrer l'image de la fente d'entrée (14).

4. Monochromateur selon la revendication 3, caractérisé par le fait que les deuxièmes moyens optiques de reproduction (40) sont formés par un miroir concave.

5. Monochromateur selon l'une des revendications 1 à 4, caractérisé par le fait qu'une fente de sortie (52, 82) est disposée dans la marche des rayons du faisceau (48, 80) engendré par le deuxième élément dispersif (44, 56) par réunion du faisceau dispersé (22, 60), dans le plan d'image (50) d'un image de la fente d'entrée (14, 70).

6. Monochromateur selon la revendication 1, caractérisé par le fait que

(a) les deux éléments dispersifs (54, 56) sont des réseaux,

(b) les premiers moyens optiques de reproduction présentent un premier miroir concave (68), et

(c) les deuxièmes moyens optiques de reproduction présentent le premier miroir concave (68) et le deuxième miroir concave (74).

7. Monochromateur selon la revendication 6, caractérisé par le fait que

(a) le premier miroir concave (68) reproduit le point de dispersion (66) du premier élément dispersif (54) dans l'infini, et en même temps il reproduit la fente d'entrée (70) sur ladite surface (72), et

(b) le deuxième miroir concave (74) dirige les faisceaux parallèles dispersés (62, 64) sur le point de dispersion (76) du deuxième élément dispersif (56).

8. Monochromateur selon la revendication 7, caractérisé par le fait que le deuxième élément dispersif (56) est disposé par rapport au deuxième miroir concave (74) essentiellement comme le premier élément dispersif (54) par rapport au premier miroir concave (68).

9. Monochromateur selon la revendication 7 ou 8, caractérisé par le fait que

(a) les deux éléments dispersifs (54, 56) formés comme réseaux sont disposés avec les côtés arrières en face l'un de l'autre, et

(b) les deux miroirs concaves (68, 74) en face l'un de l'autre sont inclinés en sens inverse, formant ainsi une droite (78) reliant les apex des miroirs concaves.

10. Monochromateur selon la revendication 9, caractérisé par le fait que les réseaux sont des réseaux plans.

11. Monochromateur selon la revendication 9 ou 10, caractérisé par le fait que

(a) les deux réseaux sont disposés symmétriquement et parallèlement à un plan central (72),

(b) les deux miroirs concaves (68, 74) sont disposés symmétriquement à ce plan central (72) de sorte que ladite droite (78) reliant les apex des deux miroirs concaves (68, 74) s'étend verticalement à ce plan central (72),

(c) les faisceaux (62, 64) spectralement dispersés s'étendent entre les miroirs concaves (68, 74) parallèlement à cette droite (78), et

(d) l'image réel spectralement décomposé de la fente d'entrée (70) est situé essentiellement dans le plan central (72).

12. Monochromateur selon la revendication 8, caractérisé par le fait que les deux miroirs concaves (68, 74) en face l'un de l'autre sont inclinés dans le même sens par rapport à une droite (78).

13. Monochromateur selon l'une des revendications 1 à 12, caractérisé par le fait que la fente intermédiaire (38) est formée par une section d'une fente (34) prévue en spirale dans un disque rotatif (30).

14. Monochromateur selon la revendication 13, caractérisé par le fait que la fente (34) est formée en spirale de sorte qu'en cas d'incréments d'écart angulaire égaux du disque, la fente intermédiaire (38) est déplacée de distances correspondant à chaque fois à des incréments de longueur d'onde égaux, par rapport à l'image spectralement décomposé (36) de la fente d'entrée (14).

15. Monochromateur selon la revendication 13 ou 14, caractérisé par le fait que la largeur de la fente en spirale (34) se modifie le long de celle-ci de sorte que sur tout le domaine de longueur d'onde exploré il résulte une largeur de fente spectrale essentiellement constante.

16. Monochromateur selon l'une des revendications 13 à 15 dans lequel les éléments dispersifs (20, 44) sont des réseaux, caractérisé par le fait que le disque (30) porte des filtres appelés à supprimer des ordres de réseau perturbateurs.

17. Monochromateur selon l'une des revendications 1 à 16 dans lequel les éléments dispersifs (20, 44) sont des réseaux, caractérisé par le fait que des filtres fixes (88) appelés à supprimer des ordres de réseau non désirés sont disposés dans la marche des rayons des faisceaux spectralement dispersés.

18. Monochromateur selon la revendication 17, caractérisé par le fait que les filtres (88) sont disposés dans l'approximité mais à distance de la surface (72) dans laquelle les premiers moyens optiques de reproduction (68) engendrent l'image réel spectralement décomposé de la fente d'entrée (70).

**Claims**

1. Monochromator having variable wavelength, comprising
   (a) an entrance slit (14, 70),
   (b) a first dispersive element (20, 54) having a dispersion point (18, 66) located at the optical axis, in which point an incident beam (16, 58) is dispersed into beams (22, 60) emergent at different angles depending on the wavelength,
   (c) a second dispersive element (44, 56) having an associated dispersion point (42, 76),
   (d) first imaging optical means (12, 68) for generating a real spectrally slit image of the entrance slit (14, 70) in a surface (28, 72) located in the paths of rays between the first (20, 54) and the second (44, 56) dispersive element, and
   (e) an intermediate slit (38) arranged in this latter surface,
   characterized in that
   (f) the dispersion point (18, 66) of the first dispersive element (20, 54) is imaged upon the dispersion point (42, 56) of the second dispersive element (44, 56) through second imaging optical means (40, 74),
   (g) the intermediate slit (38) is transversally movable for variation of the wavelength, and
   (h) the second dispersive element (44, 56) is arranged such that it reunifies the beams (46) dispersed by the first dispersive element (20, 54) and directed to the dispersion point (42, 76) of the second dispersive element (44, 56) through the second optical means (40, 74) substantially to a single beam (48, 80).

2. Monochromator as set forth in claim 1, characterized in that the two dispersive elements (20, 44, 54, 56) are formed substantially identically.

3. Monochromator as set forth in claim 2, characterized in that the two dispersive elements (20, 44) are concave gratings, the concave shape of the first dispersive element (20) serving as imaging optical means for generating the image of the entrance slit (14).

4. Monochromator as set forth in claim 3, characterized in that the second optical means (40) are formed by a concave mirror.

5. Monochromator as set forth in any one of the claims 1 to 4, characterized in that an exit slit (52, 82) is arranged in the image plane (50) of an image of the entrance slit (14, 70) in the path of rays of the beam (48, 80), which is generated by the second dispersive element (44, 56) by reunifying the dispersed beams (22, 60).

6. Monochromator as set forth in claim 1, characterized in that
   (a) the two dispersive elements (54, 56) are gratings,
   (b) the first imaging optical means have a first concave mirror (68), and
   (c) the second imaging optical means have the first concave mirror (68) and the second concave mirror (74).

7. Monochromator as set forth in claim 6, characterized in that
   (a) the first concave mirror (68) images the dispersion point (66) of the first dispersive element (54) at infinity and simultaneously images the entrance slit (70) on said surface (72), and
   (b) the second concave mirror (74) directs the dispersed parallel beams (62, 64) to the dispersion point of the second dispersive element (56).

8. Monochromator as set forth in claim 7, characterized in that the second dispersive element (56) is arranged with respect to the second concave mirror (74) substantially in the same manner as the first dispersive element (54) is arranged with respect to the concave mirror (68).

9. Monochromator as set forth in claims 7 or 8, characterized in that
   (a) the two dispersive elements (54, 56) formed as gratings are arranged back-to-back, and
   (b) the two concave mirrors (68, 74) facing each other are inclined in opposite directions with respect to a straight line (78) connecting the vertexes of the concave mirrors.

10. Monochromator as set forth in claim 9, characterized in that the grating are plane gratings.

11. Monochromator as set forth in claims 9 or 10, characterized in that
    (a) the two gratings are arranged symmetrical and parallel to a center plane (72),
    (b) the two concave mirrors (68, 74) are arranged symmetrical to this center plane (72), said straight line (78) connecting the vertexes of the two concave mirrors (68, 74) extending perpendicular to this center plane (72),
    (c) the spectrally dispersed light beams (62, 64) extend between the concave mirrors (68, 74) parallel to this straight line (78), and
    (d) the real spectrally split image of the entrance slit (70) is located substantially in the center plane (72).

12. Monochromator as set forth in claim 8, characterized in that the two concave mirrors (68, 74) facing each other are inclined in the same direction with respect to a straight line (78).

13. Monochromator as set forth in any one of the claims 1 to 12, characterized in that the intermediate slit (38) is formed by a section of a slit (34) spirally provided in a rotatable disc (30).

14. Monochromator as set forth in claim 13, characterized in that the slit (34) is spirally formed in such a manner that the intermediate slit (38) is displaced relative to the spectrally split image (36) of the entrance slit (14) by distances corresponding to equal wavelength increments with equal rotary angle increments of the disc (30).

15. Monochromator as set forth in claims 13 or 14, characterized in that the width of the spiral slit (34) varies there along such that a substantially constant spectral slit width is obtained over the total scanned wavelength range.

16. Monochromator as set forth in any one of the claims 13 to 15, in which the dispersive elements are gratings, characterized in that the disc (30) carries filters for suppression of disturbing grating orders.

17. Monochromator as set forth in any one of the claims 1 to 16, in which the dispersive elements are gratings, characterized in that stationary filters (88) for suppression of unwanted grating orders are arranged in the path of rays of the dispersed spectral beams.

18. Monochromator as set forth in claims 17, characterized in that the filters (88) are arranged in proximity of but spaced from the surface (72), in which the first imaging optical means (68) generate the real spectrally split image of the entrance slit (70).

Fig.1

Fig. 2

**0 098 429**

Fig. 3

Fig. 4

2

Fig. 5